# EUROPEAN PATENT APPLICATION

(11) **EP 1 302 101 A2**
(43) Date of publication of application: **16.04.2003**
(21) Application number: 02022524.9
(22) Date of filing: 07.10.2002
(51) Int. Cl.: A01J 7/02, A01J 5/04

(54) **Device for increasing the vacuum level in a milking plant during its washing**

(30) Priority: 12.10.2001 IT MI20010545 U
(71) Applicant: INTERPULS S.P.A., 42020 Albinea, Reggio Emilia (IT)
(72) Inventor: Sicuri, Roberto, 43100 Parma (IT); Nicolini, Gabriele, 42042 Fabbrico (Reggio Emilia) (IT)
(74) Representative: Giambrocono, Alfonso, Dr. Ing.

(57) **Abstract**

The device (10) enables the vacuum level in a milking plant to be increased during the washing operation. The plant comprises a main valve and a servo-control (40). In a first type of plant the servo-control (40) is applied directly to the main valve (42) to form one piece therewith (42) and is also connected to the vacuum line (48) by a vacuum take-off tube (44). In a second type of plant the servo-control (40) is separate from the main valve (42), is applied directly to the vacuum line and is connected to the main valve by a pipe (50). The device (10) comprises means (26, 22) for introducing, during the washing operation on the milking plant, a constant air flow at atmospheric pressure into the vacuum take-off tube (44) of the servo-control (40) in the case of the first type of plant, or into the connection pipe (50) between the servo-control (40) and main valve (42) in the case of the second type of plant.

## Description

The present invention relates to a device for increasing the vacuum level in a milking plant during the plant washing operation.

As is well known to the expert of the art, the vacuum level in a milking plant is normally controlled by a valve known as the vacuum control valve. This consists of two parts, namely a main valve and a servo-control (or sensor). A vacuum control valve is described for example in Italian Utility Model Application MI99U 000631 in the name of the same applicant.

The purpose of the servo-control is to continuously monitor the vacuum level in the plant, compare it with the set vacuum level and feed a pneumatic control signal to the main valve. More specifically, the servo-control creates a vacuum within a chamber provided in the main valve, this vacuum raising a membrane and consequently a valving element connected to it to enable atmospheric air to enter the plant vacuum line, until the desired vacuum level set by calibrating the servo-control is obtained in the plant.

The set vacuum level is generally established on the basis of the type of milking plant and of the "genetic level" to which the herd of animals to be milked pertains.

The tendency is however to lower the milking vacuum level, mainly to safeguard as much as possible the cutaneous tissue of the animal's teats and the relative blood circulation, to ensure greater wellbeing of the animals. However the tendency to provide a lower vacuum level during the milking operation is in contrast to the requirements dictated by an effective subsequent washing operation on the plant. In this respect, the washing operation is carried out in the following manner: a determined quantity of wash solution obtained by diluting specific detergents in water is fed (directly or with the aid of an accessory known as a "wash unit") into a precise point of the plant. This wash solution is circulated through the plant by utilizing the drive effect due to the vacuum level present in the pipes. It is evident that the lower the vacuum level, the lower the velocity with which the wash solution circulates through the plant.

Good washing is known to be determined essentially by the type of solution used, its temperature and concentration and, in particular, by high turbulence. This latter fact is important to obtain above all proper washing in the less accessible regions.

At this point it will be evident that two separate but contrasting requirements exist, namely:
a) the requirement of effecting the milking operation at a low vacuum level;
b) the requirement that the subsequent washing operation be effected at a sufficiently high vacuum level to enable proper plant washing to be obtained.

Considering that there is only one means for controlling the vacuum level and that this is set at the vacuum level used during milking, a second control means must be available to enable the plant washing operation to be effected at a higher vacuum level than for milking.

For this purpose, milking plants currently comprise two vacuum control valves, each set at the vacuum level appropriate for the two aforespecified working conditions (milking and washing). Under milking conditions only the control valve set at the lower vacuum level is operative, the other valve being excluded from the plant. On termination of the milking operation the first valve has to be excluded to enable the second valve to operate. This is achieved by providing gate valves at suitable positions in the plant.

However this solution has the following drawbacks:
- it is hardly practical as it requires manual intervention (said gate valves have to be operated by the operator);
- due to possible forgetfulness by the operator, opposite conditions to those required could occur in the plant, i.e. the higher vacuum level could exist during milking instead of during washing, and vice versa;
- the solution is costly, involving the installation of two vacuum control valves in the same milking plant.

To complete the state of the known art it should also be noted that the most widely used vacuum level control means are of two types:
a) the most widely used of all is a "monobloc" control means, in which the servo-control forms one piece with the main valve and is applied directly to it. In this case the servo-control senses the vacuum level within the plant by a vacuum take-off tube about 50 cm long. This tube terminates at one end with a nipple to be screwed into the vacuum line, its other end being inserted into the servo-control in such a manner as to be able to connect the vacuum line to the rest of the plant:
b) in the other known type of control means, the servo-control is separate from the main valve. Specifically, the servo-control is screwed, with the aid of suitable brackets, directly to the vacuum line in a region adjacent to the milking hall, the main valve again being installed in the same line but close to the vacuum pump. The maximum allowable distance between the servo-control and the main valve is about 10 metres. In this case the servo-control feeds its signal to the main valve via a small-diameter flexible connection pipe, fixed to the vacuum line by clips.

Taking into account the two aforedescribed configurations of the control means, the object of the present invention is to provide a device for increasing the vacuum level in the plant during its washing, which enables the aforesaid drawbacks to be eliminated.

This object is attained by the device of the present invention, usable both with the first type and with the second type of control means, characterised by comprising means for introducing, during the washing operation, a constant air flow at atmospheric pressure into the vacuum take-off tube of the servo-control in the case of the first type of control means, or into the connection pipe between the servo-control and main valve in the case of the second type of control means.

In this manner, by means of the device of the present invention, if the first case applies, during the washing operation the vacuum level sensed by the servo-control is deliberately falsified (so that this senses a vacuum level lower than the real level), whereas if the second case applies, during the washing operation the control signal which the servo-control feeds to the main valve is falsified. The result in both cases is that the main valve automatically provides for increasing the vacuum level in the plant during the washing operation. Hence the requirement of having during the washing operation a vacuum level in the plant which is sufficiently high to obtain optimum washing is satisfied in a very simple manner.

Conveniently the device of the invention comprises a means for controlling the air flow to be introduced into the plant.

The invention will be more easily understood from the following description of one embodiment thereof, and of the manner in which this embodiment is inserted into a milking plant provided with the first or with the second type of control means, as specified above. In this description reference is made to the accompanying drawings, in which:
Figure 1 is a partly sectional elevation of a device according to the invention;
Figure 2 is a cross-section therethrough on the line 2-2 of Figure 1;
Figure 3 shows how the device is mounted in the case of a milking plant incorporating the first type of means for controlling the vacuum level;

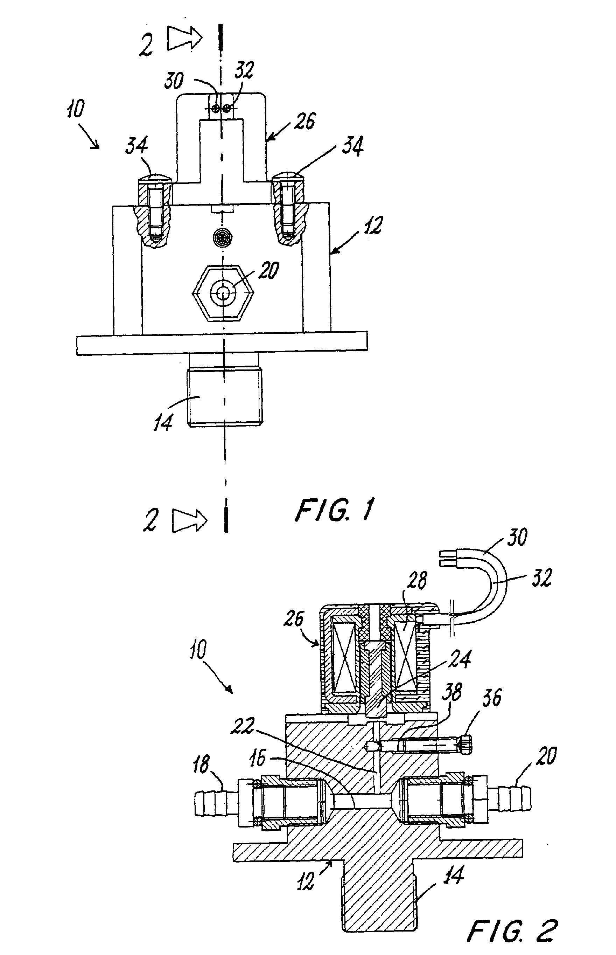

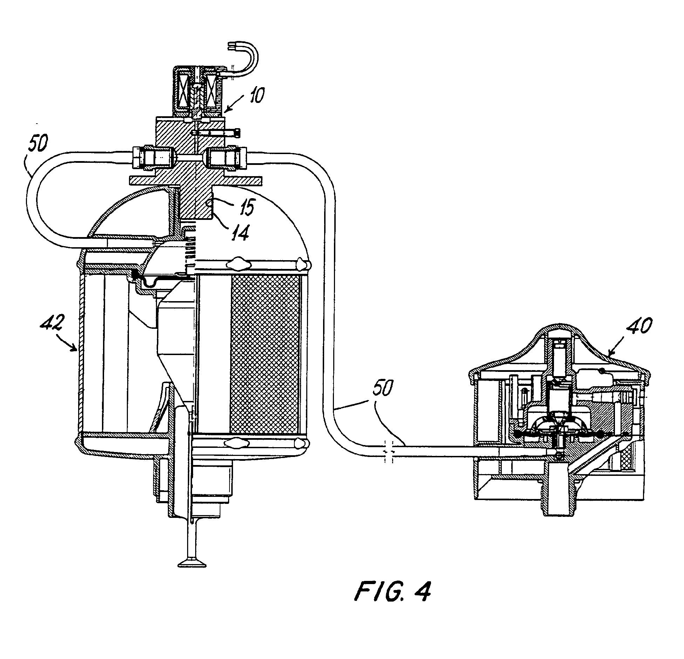

Figure 4 shows how the device is mounted in the case of a milking plant incorporating the second type of means for controlling the vacuum level. As can be seen from Figures 1 and 2, the device 10 comprises a body 12 (preferably constructed of a suitable plastic material) provided with a laterally threaded cylindrical lower projection 14, the function of which will be clarified hereinafter. The body 12 is provided internally with a conduit 16 (Figure 2) which connects horizontally together two opposing connectors 18 and 20 of the type for hoses. From an intermediate point of the conduit 16 there upwardly extends a channel 22 of smaller diameter, the upper end of which communicates with atmosphere and is closable by a valving element 24 (shown in Figure 2 in its open position) formed by the core, vertically movable in both directions, of a solenoid valve (indicated overall by 26) applied to the top of the body 12 by screws 34 and provided with the relative coil 28 the ends of which can be connected, via the connectors 30 and 32, to a source of low voltage electrical energy (not shown but conveniently of 12 or 24 volts).

The device 10 is provided with a means for adjusting the flow of atmospheric air (at atmospheric pressure) entering through the second channel 22, comprising a grub screw 36 screwable into or out of a relative threaded seat 38 provided in the body 12 and communicating with the second channel 22. The inner end of the grub screw 36 is shaped such that by screwing the grub screw 36 into its seat to a greater or lesser extent, the free cross-section of the channel 22 can be varied, to hence control the atmospheric air flow entering when the valving element 24 of the solenoid valve 26 is in its open position.

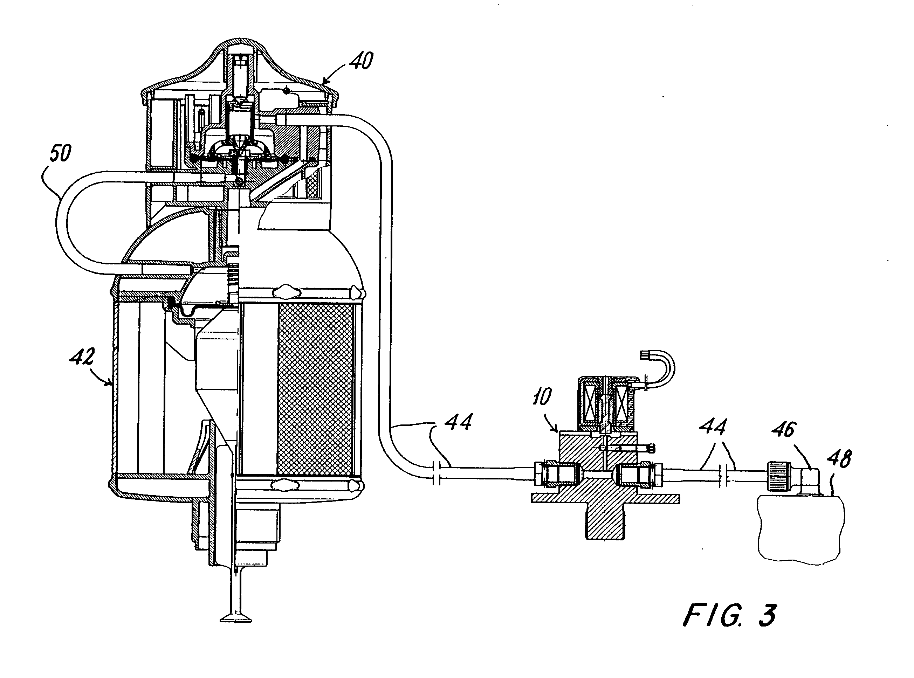

With reference now to Figure 3, which as stated represents the situation of a milking plant provided with the first type of control means, i.e. comprising a servo-control 40 applied, in this specific case, directly to the main valve 42 by screwing and connected to this latter by a short flexible pipe 50. As can be seen, the device 10 is inserted into the so-called vacuum take-off tube 44, one end of which is connected by a nipple 46 to the vacuum line 48 of the milking plant. The vacuum take-off tube 44 of the servo-control 40 is interrupted to connect one of its ends to the connector 18 of the device 10 and its other end to the connector 20 of this latter (so restoring continuity of the tube 44). Conveniently the device 10 is located at about half way along the length of the vacuum take-off tube 44.

As will be apparent the installation of the device 10 is extremely simple and rapid. Its operation is also simple. It is sufficient to energize the coil 28 of the solenoid valve 26, for the valving element 24 (normally in its closed position, in which it is maintained by the fact that a determined vacuum level is present in the channel 22) to be pulled upwards (to hence assume the position shown in Figure 2), so opening the upper end of the channel 22. This enables a determined constant flow of atmospheric air to enter the conduit 16 and hence enter the vacuum take-off tube 44. Consequently a falsified signal reaches the servo-control 40, in the sense that the servo-control 40 senses a vacuum level less than the effective level, with the result that the servo-control 40 acts on the main valve 42 to cause this to establish within the milking plant a vacuum level which is higher than that during the milking operation and such as to achieve effective plant washing.

By acting on the adjustment screw 36 with a screwdriver, the constant air flow entering through the device 10 can be adjusted within a determined range, with consequent adjustment of the vacuum level in the plant. The effect obtained (the degree of vacuum within the milking plant) is higher the higher the entering flow of atmospheric air.

If the milking plant is provided with a wash unit (not shown), this latter is conveniently provided with a low voltage offtake to power the coil 28 of the device 10. Consequently during the washing operation, and thus with the wash unit in operation, the coil 28 is automatically energized, so that the device 10 operates.

If the milking plant is not provided with a wash unit, to operate the device 10 a power supply for the coil 28 must be provided, to be switched on manually.

Figure 4 shows the case in which the means for controlling the vacuum level are of the second type, i.e. with the servo-control 40 positioned at a determined distance from the main valve 42 (this distance not exceeding 10 metres)and screwed in known manner (not shown for simplicity) directly onto the vacuum line (not shown for simplicity) of the milking plant. Hence the vacuum level sensed by the servo-control 40 is the effective level. The servo-control 40 is connected to the main valve 42 by a flexible pipe 50. This latter is interrupted, with the two ends resulting from the interruption being connected respectively to the connectors 18 and 20 of the device 10. As can be seen, the device 10 is positioned on the top of the main valve 42 (in the same position in which the servo-control 40 is disposed in Figure 3), using for this purpose the lower cylindrical projection 14 on the body 12 of the device 10, this projection being threaded so that the device 10 can be screwed onto the main valve 42. In the first portion of the connection pipe 50, extending between the servo-control 40 and the device 10, there is a controlled vacuum level which is represented by the signal emitted by the servo-control 40 to control the main valve 42. Consequently, when during the washing operation the coil 28 of the solenoid valve of the device 10 is put under voltage, the valving element 24 of the solenoid valve 26 rises so that atmospheric air is made to enter the connection pipe 50 through the device 10. This enables the control signal for the main valve 42 to be falsified, so that this latter causes less atmospheric air to enter the plant, with consequent increase in the vacuum level in the pipes of the plant. As in the preceding case, the increase in the vacuum level within the plant is directly proportional to the air flow introduced by the device 10, this flow being adjustable by the adjustment screw 36.

In both the aforedescribed cases, on termination of the washing operation the power to the coil 28 is interrupted, so causing the closure of the upper end of the channel 22 of the device 10, so that air is no longer introduced therethrough. The vacuum level corresponding to the milking operation is consequently restored.

As will be apparent from the aforegoing, the device of the present invention is extremely economical, precise, effective and reliable, besides being extremely simple to install and of very small overall size. From tests carried out it has been found that this device maintains its reliability with time. If the milking plant is provided with a wash unit, the device can be made to operate automatically in both the described cases, as already stated.

As seen, the device 10 also enables the increase in vacuum level in the milking plant during the washing operation to be easily adjusted at will (within a determined range) by means of the grub screw 36.

Finally it should be noted that the washing device of the present invention can be used with most of the commercially available main valves, so that it is extremely versatile.

## Claims

1. A device (10) for increasing the vacuum level in a milking plant during the washing operation, the milking plant being provided with vacuum control means comprising a main valve and a servo-control (40), in a first type of control means the servo-control (40) being applied directly to the main valve (42) or forming one piece therewith (42) and being also connected to the vacuum line (48) by a vacuum take-off tube (44), in a second type of control means the servo-control (40) being separate from the main valve (42), being applied directly to the vacuum line and being connected to the main valve by a pipe (50), **characterised by** comprising means (26, 22) for introducing, during the washing operation, a constant air flow at atmospheric pressure into the vacuum take-off tube (44) of the servo-control (40) in the case of the first type of control means, or into the connection pipe (50) between the servo-control (40) and main valve (42) in the case of the second type of control means.

2. A device (10) as claimed in claim 1, wherein the means for introducing a constant air flow comprise a solenoid valve (26) which, depending on whether its coil (28) is energized or not, enables or respectively prevents the introduction of the air flow.

3. A device (10) as claimed in claim 2, wherein when the coil (28) of the solenoid valve (26) is not energized, the valving element of this latter (42) closes that end of a channel (22) which opens to atmosphere, its other end communicating respectively with the vacuum take-off tube (44) or with the connection pipe (50) between the servo-control (40) and the main valve (42).

4. A device (10) as claimed in claim 1, wherein a means (36) is provided for adjusting the air flow entering through the device (10).

5. A device (10) as claimed in claims 1 and 2, wherein the air flow adjustment means comprises a grub screw (36) which enables the cross-section of the channel (22) to be adjusted by being screwed in or out.

6. A device (10) as claimed in claim 2, wherein the channel (22) is formed in a body provided with connectors (18, 20) for inserting the device (10) into the vacuum take-off tube (44) or into the connection pipe (50), depending on whether the vacuum control means are of the first or second type, the connectors (18, 20) communicating via a conduit (16) also formed in the body (12), one end of the channel (22) communicating with the conduit (16), the solenoid valve (26) being applied to the body (12).

7. A device (10) as claimed in claim 5, wherein the grub screw (36) is screwable into or out of a threaded seat (38) provided in the body (12).

8. A device (10) as claimed in claim 5, wherein if the main valve (42) is of the type presenting a threaded hole (15) which enables the servo-control (40) to be applied by screwing into the hole (15) a laterally threaded cylindrical projection (14) with which the servo-control (40) is provided, the body (12) presents a similar laterally threaded cylindrical projection (14) to enable the device (10) to be applied to the main valve (42).

9. A device (10) as claimed in claim 1, wherein the coil (28) of the solenoid valve (26) is powered by a source of low voltage electrical energy.

10. A device (10) as claimed in claim 1, wherein, if the milking plant is provided with a wash unit, the coil (28) of the solenoid valve (26) is powered by a low voltage offtake from the wash unit.
